# EUROPEAN PATENT APPLICATION

(11) **EP 4 697 221 A2**
(43) Date of publication of application: **18.02.2026**
(21) Application number: 25217813.2
(22) Date of filing: 12.10.2023
(51) Int. Cl.: G06F 21/62

(54) **SYSTEM AND METHOD OF SECURE DIGITAL DOCUMENT CONVERSIONS AMONG INCOMPATIBLE STANDARDS**

(30) Priority: 17.10.2022 EP 22306573
(62) Divisional of application: 23786605.8
(71) Applicant: THALES DIS FRANCE SAS, 92190 Meudon (FR)
(72) Inventor: SCHALLDACH, Thomas, 27343 Bu tehrad (CZ); BRUNA, Hugo, 13000 Praha (CZ); MAUNIER, Gérald, 83110 Sanary (FR)
(74) Representative: Quintero Romero, Manuel

(57) **Abstract**

A system or method of just-in-time conversion of non-interoperable digital documents from a first secure standard (such as ISO) to a second secure standard (such as Verifiable Credentials) includes a wallet and issuer of the first secure standard, a verifier and a just-in-time issuer and converter of the second standard, where the wallet performs the functions of making a service request of the verifier, sending a proposed presentation to the verifier, generating a token and consented attributes with the just-in-time issuer and converter which forwards the token to the issuer and securely builds a presentation request for the second secure standard, receiving the presentation request from the just-in-time issuer and converter, forwarding the presentation request to the verifier, and presenting information about a converted presentation of a digital document of the second secure standard in the wallet of the first secure standard.

## Description

### TECHNICAL FIELD

The present invention generally relates to conversion of incompatible digital documents. More particularly, but not exclusively, the present disclosure relates to the secure digital document conversions among non-interoperable based system.

### BACKGROUND OF THE INVENTION

Several standards exist for digital documents including ISO 18013-5 that provides for standardized interface specifications for the implementation of a driving license in association with a mobile device (mDL). The ISO standardizes the interface between the mDL and an mDL Reader, and the interface between the mDL Reader and the issuing authority infrastructure. The standard also allow parties other than the issuing authority (e.g. other issuing authorities, or mDL Verifiers in other countries) to:
a) use a machine to obtain the mDL data,
b) tie the mDL to the mDL Holder,
c) authenticate the origin of the mDL data, and
d) verify the integrity of the mDL data.

Unfortunately, there are other standards that are incompatible or non-interoperable with the ISO standard in some or all respects.

Such a non-interoperable standard includes W3C's Verifiable Credentials (VC) which is used to assert that the holder is capable of operating a motor vehicle, a level of university education, or provide government-issued passports enabling the holder to travel between countries. VC provides benefits in the physical world and is expanding to online or web based arenas such as where third-party verified machine-readable personal information is provided on the Web. The VC specification provides a standard way to express credentials on the Web in a way that is cryptographically secure, privacy respecting, and machine-verifiable. Some of the use cases for VC are similar or the same such as information related to identifying the subject of the credential (for example, a photo, name, or identification number), information related to the issuing authority (for example, a city government, national agency, or certification body), and information related to the type of credential this is (for example, a Dutch passport, an American driving license, or a health insurance card).

A verifiable credential can represent all of the same information that a physical credential represents. The addition of technologies, such as digital signatures, makes verifiable credentials more tamperevident and more trustworthy than their physical counterparts. Holders of verifiable credentials can generate verifiable presentations and then share these verifiable presentations with verifiers to prove they possess verifiable credentials with certain characteristics.

The word "verifiable" in the terms verifiable credential and verifiable presentation refers to the characteristic of a credential or presentation as being able to be verified by a verifier. Verifiability of a credential does not imply that the truth of claims encoded therein can be evaluated; however, the issuer can include values in the evidence property to help the verifier apply their business logic to determine whether the claims have sufficient veracity for their needs.

Such non-interoperability among these standards can create a number of inconveniences for both the holder of digital documents and the authorities (e.g., government agencies, insurance companies, universities, department of motor vehicles, customs agents, etc.) that issue or utilize such digital documents in their day to day operations.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY OF THE INVENTION

The present invention provides a solution for the aforementioned problems by a computer implemented method of just-in-time conversion of digital documents from a first secure standard to a second secure standard that are not inter-operable according to claim 1, a system of just-in-time conversion of digital documents from an ISO standard serving as a first secure standard to a second secure standard that are not inter-operable according to claim 9, and a system of just-in-time conversion of digital documents from a first secure standard to a second secure standard that are not inter-operable according to claim 16. In dependent claims, preferred embodiments of the invention are defined.

In a first inventive aspect, the invention provides a computer implemented method of just-in-time conversion of digital documents from a first secure standard (such as ISO) to a second secure standard (such as VC) that are not inter-operable using one or more processors operatively coupled to memory having computer instructions which when executed by the one or more processors causes the one or more processors to perform the functions at a wallet (which can apply to standard wallets and cloud wallets as well) of the first secure standard in communication with a verifier of the second secure standard, a just-in-time issuer and converter of the second standard, and with an issuer of the first secure standard via the just-in-time issuer and converter of the second standard of making a service request of the verifier of the second secure standard and sending a proposed presentation to the verifier of a digital document in the second secure standard, obtaining consent to a just-in-time conversion and to attributes of the digital document of the second secure standard to provide consented attributes, generating a token and exchanging the token and consented attributes with the just-in-time issuer and converter which forwards the token to the issuer of the first secure standard and securely builds a presentation request for the second secure standard, receiving the presentation request from the just-in-time issuer and converter, forwarding the presentation request to the verifier of the second secure standard, and presenting a converted presentation of a digital document of the second secure standard in the wallet of the first secure standard.

In some embodiments, the first secure standard is ISO-18013-5 and the second secure standard is W3C's Verifiable Credentials and where the wallet of the first secure standard is an ISO Wallet, the verifier of the second secure standard is a VC verifier, the just-in-time issuer and converter is a just-in-time Verifiable Credential issuer and converter, and the issuer of the first secure standard is an ISO Issuer.

In some embodiments, the token sent by the ISO wallet to the a just-in-time Verifiable Credential issuer and converter causes the just-in-time Verifiable Credential issuer and converter to verify a signature and extract attributes from an ISO response to the token, generate a subject key pair, generate a subject decentralized identifier (DID) with a key method, and generate a VC just-in-time for the subject DID where the just-in-time Verifiable Credentials issuer and converter securely builds the presentation request. In some embodiments, the just-in-time Verifiable Credentials issuer and converter discards a holder key or keys for an enhanced privacy single use key.

In some embodiments, when the ISO issuer fails to support the Verifiable Credentials standard, the ISO Wallet is further configured to perform the functions of generating a subject key pair, generating a subject decentralized identifier (DID) with a key method, exchanging an ISO token and consented attributes for the just-in-time Verifiable Credentials including the subject DID with the just-in-time Verifiable Credential issuer and converter, receiving the just-in-time Verifiable Credentials, generating a just-in-time Verifiable Presentation, building a presentation request with the just-in-time Verifiable Presentation, and presenting the converted presentation of the digital document of the Verifiable Credentials standard in the wallet of the ISO standard.

In some embodiments, the method further has computer instructions which causes the one or more processors to perform the functions at a wallet of the second secure standard in communication with a verifier of the first secure standard, and a just-in-time issuer and converter of the first standard of making a service request of the verifier of the first secure standard, sending a proposed presentation of the digital document with attributes to the just in time issuer and converter of the first standard, obtaining consent to attributes of the digital document of the first secure standard to provide consented attributes, building a presentation request for a presentation in the first secure standard converted from the second secure standard, sending the presentation request to the just-in-time issuer and converter of the first standard, receiving a secure access code or token from the just-in-time issuer and converter of the first standard, presenting the secure access code to the verifier of the first standard, wherein the verifier of the first standard must trust the just-in-time issuer and converter of the first standard in a verification, and presenting a converted presentation of a digital document of the first secure standard in the wallet of the second secure standard after a successful verification.

In some embodiments, the first secure standard is ISO-18013-5 and the second secure standard is W3C's Verifiable Credentials and where the wallet of the second secure standard is a VC Wallet, the verifier of the first secure standard is an ISO verifier, and the just-in-time issuer and converter is a just-in-time ISO issuer and converter. In some embodiments, a token is sent by the VC wallet to the just-in-time ISO issuer and converter which causes the just-in-time ISO Credential issuer and converter to request a presentation and attributes of the first secure standard in response to the token sent by the VC wallet, receive a presentation request from the VC wallet, verify the presentation and extract claims, generate an ISO response from the claims extracted, store the ISO response and generate an ISO token, generate a QR code from the ISO token and send the QR code to the VC wallet, wherein the QR code serves as the access code, lookup an ISO response after the VC wallet presents the QR code to the ISO verifier and the ISO verifier requests an exchange of data for an ISO Code derived from the ISO token, send the ISO response to the ISO verifier and where the VC wallet presents a converted presentation of a digital document of the ISO-18013-5 standard in the VC wallet after a successful verification by the ISO verifier.

In a second inventive aspect, the invention provides a system of just-in-time conversion of digital documents from an ISO standard serving as a first secure standard to a second secure standard that are not inter-operable, the system includes one or more processors operatively coupled to memory having computer instructions causing the one or more processors to perform the functions at a just-in-time issuer and converter of ISO standard digital documents (JIT_ISO) of receiving a proposed presentation and attributes for conversion from a wallet of the second secure standard, requesting a presentation and attributes from the wallet of the second secure standard, receiving a presentation request, verifying the presentation and extract claims, generating an ISO response from the extracted claims, storing the ISO response, generating an access code, send the access code to the wallet of the second secure standard, and looking up an ISO response after the wallet of the second secure standard presents the QR code to the ISO verifier and the ISO verifier requests an exchange of data for an ISO Code derived from the ISO token. In some embodiments, the system can send the ISO response to the ISO verifier where the wallet of the second secure standard can present information about a converted presentation of a digital document of the ISO-18013-5 standard (or can present the converted presentation of the digital document of the ISO-18013-5 standard itself) in the wallet after a successful verification by the ISO verifier.

In some embodiments, the ISO standard is ISO-18013-5 and the second secure standard is W3C's Verifiable Credentials standard and where the wallet of the second secure standard is an VC Wallet, and the just-in-time issuer and converter is a just-in-time ISO issuer and converter.

In some embodiments, a token is received from the VC wallet at the just-in-time ISO issuer and converter which causes the one or more processors at the just-in-time ISO Credential issuer and converter to request a presentation and attributes of the first secure standard in response to the token sent by the VC wallet, receive a presentation request from the VC wallet, verify the presentation and extract claims, generate an ISO response from the claims extracted, store the ISO response and generate an ISO token, generate a QR code from the ISO token and send the QR code to the VC wallet where the QR code serves as the access code, lookup an ISO response after the VC wallet presents the QR code to the ISO verifier and the ISO verifier requests an exchange of data for an ISO Code derived from the ISO token, send the ISO response to the ISO verifier, and where the VC wallet presents a converted presentation of a digital document of the ISO-18013-5 standard in the VC wallet after a successful verification by the ISO verifier.

In some embodiments when the system is converting a VC standard digital document to ISO standard digital data, a just-in-time Verifiable Credentials (VC) issuer and converter is configured to receive a generated token and any consented attributes from an ISO wallet, forward the token to the ISO issuer, securely build a presentation request for the ISO standard in response to receiving an ISO response from the ISO issuer, and send the presentation request from the just-in-time VC issuer and converter to the ISO wallet, wherein the ISO wallet presents a converted presentation of a VC standard digital document in the ISO wallet.

In some embodiments, the system forms a hybrid wallet that performs just in time conversions of a VC standard digital document to ISO standard digital data and of an ISO standard digital document to VC standard data.

In some embodiments, the token sent by the ISO wallet to the a just-in-time VC issuer and converter causes the just-in-time VC issuer and converter to verify a signature and extract attributes from an ISO response to the token, generate a subject key pair, generate a subject decentralized identifier (DID) with a key method, and generate a just-in-time VC for the subject DID where the just-in-time VC issuer and converter securely builds the presentation request. In some embodiments, the just-in-time VC issuer and converter discards a holder key or keys for an enhanced privacy single use key.

In a first inventive aspect, the invention provides a system of just-in-time conversion of digital documents from a first secure standard to a second secure standard that are not inter-operable using one or more processors operatively coupled to memory having computer instructions which when executed by the one or more processors causes the one or more processors to perform the functions at a just-in-time issuer and converter of the second secure standard in direct or indirect communication with a wallet of the first second standard, a verifier of the second secure standard, and with an issuer of the first secure standard, the functions comprising the steps at the just-in-time issuer and converter of the second secure standard of making a service request of the verifier of the second secure standard and sending a proposed presentation to the verifier of a digital document in the second secure standard, obtaining consent to a just-in-time conversion and to attributes of the digital document of the second secure standard to provide consented attributes, generating a token and exchanging the token and consented attributes with the just-in-time issuer and converter which forwards the token to the issuer of the first secure standard and securely builds a presentation request for the second secure standard, receiving the presentation request from the just-in-time issuer and converter, forwarding the presentation request to the verifier of the second secure standard, and presenting a converted presentation of a digital document of the second secure standard in the wallet of the first secure standard. In some embodiments, the first secure standard is ISO-18013-5 and the second secure standard is W3C's Verifiable Credentials and where the wallet of the first secure standard is an ISO Wallet, the verifier of the second secure standard is a VC verifier, the just-in-time issuer and converter is a just-in-time Verifiable Credential issuer and converter, and the issuer of the first secure standard is an ISO Issuer.

In some embodiments, the token sent by the ISO wallet to the a just-in-time Verifiable Credential issuer and converter causes the just-in-time Verifiable Credential issuer and converter to verify a signature and extract attributes from an ISO response to the token, generate a subject key pair, generate a subject decentralized identifier (DID) with a key method, and generate a just-in-time VC for the subject DID where the just-in-time Verifiable Credentials issuer and converter securely builds the presentation request.

In some embodiments, the just-in-time Verifiable Credentials issuer and converter discards a holder key or keys for an enhanced privacy single use key.

In some embodiments, the system forms a hybrid wallet that performs just in time conversions of a VC standard digital document to ISO standard digital data.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure illustrates a block diagram of system of a just-in-time secure digital document conversion from a first standard to a second standard in accordance with the embodiments.
- Figure 2: This figure illustrates a block diagram of system of a just-in-time secure digital document conversion from the second standard to the first standard in accordance with the embodiments.
- Figure 3: This figure shows illustrates a flow of information between a holder, an ISO wallet residing on a client device, a VC verifier or reader, a just-in-time VC issuer/converter, and an ISO issuer in accordance with the embodiments.
- Figure 4: This figure shows illustrates a flow of information between a holder, VC wallet residing on a client device, an ISO verifier or reader, and a just-in-time ISO issuer/converter in accordance with the embodiments.

### DETAILED DESCRIPTION OF THE INVENTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

Today there exists no known standard of interoperability between ISO-18013-5 based digital documents and Verifiable credentials. This leads to a gap in the market. Some countries may build their Digital Documents based on the mentioned ISO standard and some will build it based on Verifiable Credentials standard. This disclosure has a goal to narrow this gap by introducing a just in time interoperability that may be bidirectional, but not necessarily in all embodiments. The embodiments lead to a usage of either ecosystem within the other which can be achieved in a privacy friendly manner.

In the existing ISO 18013-5 ecosystem, the mechanism of Server Retrieval for online use cases or for use cases that require particular fresh data is the transport mechanism of choice. To recap, this mechanism uses a token created by the document holder or "DOCUMENT_HOLDER", which is transmitted to the document verifier or "DOCUMENT_VERIFIER" and is then sent to the SERVER _RETRIEVAL _ENDPOINT (which may be the ISO Issuer) by the DOCUMENT_VERIFIER to be exchanged for a signed set of attributes in the format demanded by ISO 18013-5.

In the Verifiable Credential (VC) eco system, the DOCUMENT_HOLDER will make a SERVICE_REQUEST to the DOCUMENT_VERIFIER to get the ENGAGEMENT_DETAILS. Based on the ENGAGEMENT_DETAILS, the DOCUMENT_HOLDER presents the required DOCUMENT. The Verifiable Credential eco system does not use an "Issuer" as an issuer is not involved in this presentation process.

This solution proposes to amend or extend the functionality above for either eco systems or both. Although the examples given herein are specific to ISO and VC, the embodiments are not necessarily limited to such standards. With respect to the ISO and VC standards, the functionality in the embodiments may be amended or extended with the following:

### ISO 18013-5 to VC conversion

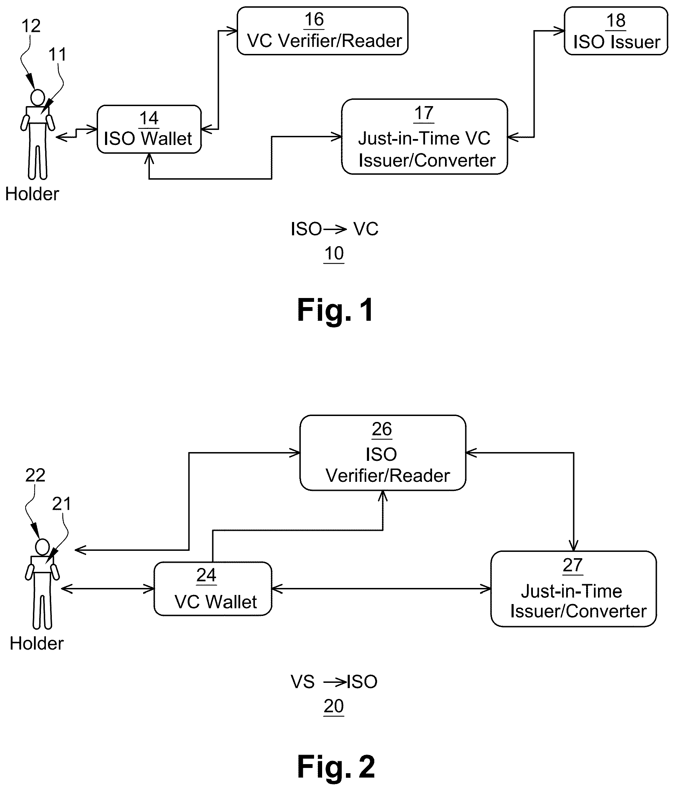

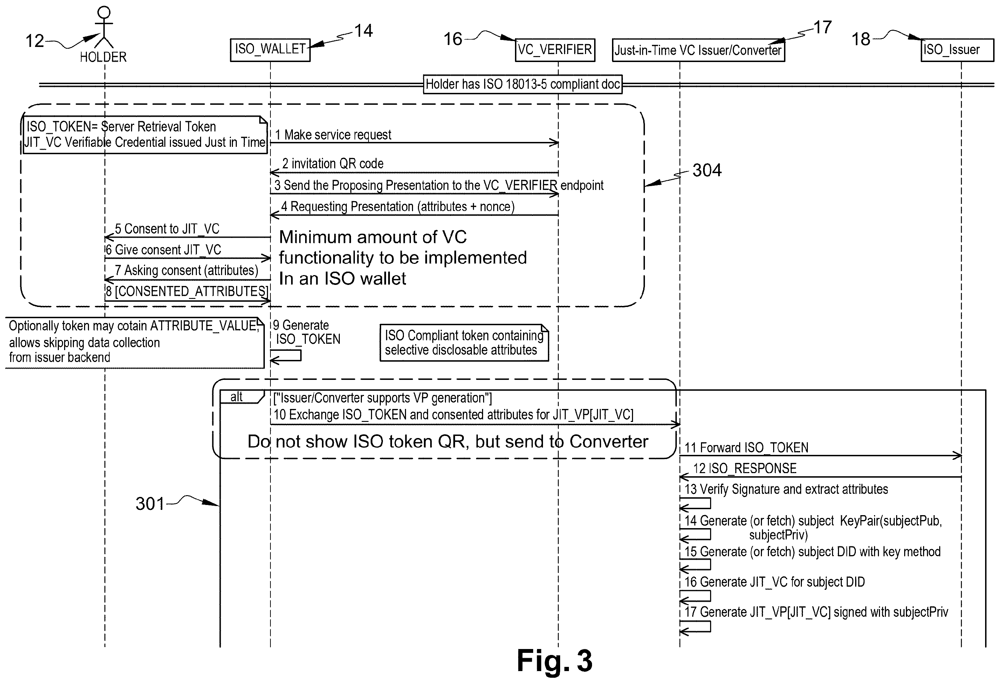

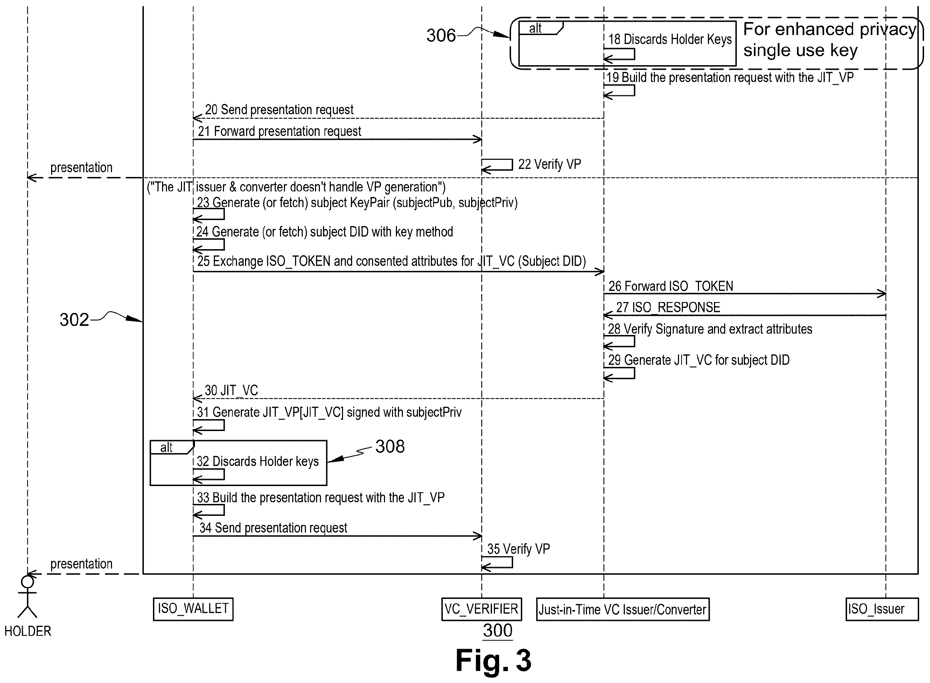

As a pre requisite and with further references to FIGs. 1 and 3, the following environment should exist:
- HOLDER 12 has ISO compliant document ISO_DOC 11.
- HOLDERs ISO_DOC 11 is in ISO_WALLET 14.
- ISO_WALLET 14 implements a minimal amount of VC_WALLET functionality as further illustrated in block 304 of FIG. 3.

Referring to the flow chart 300 of FIG. 3, the flow will start with **(1)** the creation of a service request by Holder 12 via the ISO Wallet 14 to a VC verifier 16, such as browsing to a website, that demands authentication. This can take the form of a server retrieval token such as "ISO_Token" that is sent to the verifier 16.

Upon starting the authentication flow, the web page or VC Verifier 16 will at **(2)** render a QR code which is the INVITE_CODE from the VC_VERIFIER 16. In some embodiments at **(3),** the ISO wallet 14 will send the proposing presentation to the VC_Verifier endpoint. The proposing presentation can be the VC standard digital document that will need conversion to the ISO standard. The VC_Verifier 16 will request the presentation including attributes and a nonce.

In some embodiments, the HOLDER 12 will scan the INVITE_CODE with their ISO_WALLET 14, the ISO_WALLET will detect the VC_FORMAT and prompt the user to acknowledge the start of just in time conversion "JIT_CONVERSION". The JIT_ISSUER_CONVERTER 17 will follow the standard VC verifying or presentation flow and ask the HOLDER for sharing consent at **(5).** At **(6),** HOLDER 12 consents and generates an ISO_TOKEN at **(9).** In some embodiments, the ISO Wallet 14 at **(7)** will ask consent with attributes and the holder 12 can provide the consented attributes at **(8).** The ISO_Token can contain selective disclosable attributes. In some embodiments, the token can contain an attribute value or "Attribue_Value" that allows skipping data collection from the issuer backend (18). Steps 1-8 represented by block 304 provide the minimum amount of VC functionality to be implemented in an ISO wallet.

In section **301** when the Issuer/Converter 17 supports VP (a verifiable presentation under the VC standard), the HOLDER 12 can upload the ISO_TOKEN to the JIT_ISSUER_CONVERTER 17 at **(10)** which will forward the ISO_TOKEN to the ISO_ISSUER 18 at **(11)** requesting the HOLDERs data as described in the ISO standard. When the HOLDER_DATA is received with the ISO Response at **(12),** the JIT_ISSUER_CONVERTER 17 will verify at **(13)** the ISSUER_SIGNATURE and extract the encoded ATTRIBUTES. The JIT_ISSUER_CONVERTER 17 will generate (or fetch) at **(14)** the SUBJECT_KEY_PAIR, the associated Decentralized Identifier (DID) at **(15)** and generate the JIT_VC for the DID containing the ATTRIBUTES at **(16).** The JIT_VC will then be wrapped in a just in time verifiable presentation or "JIT_VP" and signed with the SUBJECT_PRIV_KEY or subject private key at **(17).** A subject key pair or SUBJECT_KEY_PAIR may be discarded at **(18)** or stored for later usage. At block 306, the holder keys can be discarded for enhanced privacy as a single use key. A subject key pair may be discarded or stored for later usage for the DID as well. The JIT_ISSUER_CONVERTER 17 at **(19)** will build the PRESENTATION_REQUEST containing the JIT_VP and send it back to the HOLDER 12 or ISO Wallet at **(20)** which will ultimately submit or forward the JIT_VP (Just-in-Time Verifiable Presentation) to the VC_VERIFIER 16 at **(21).** At **(22),** the VC_Verifier 16 verifies the presentation (VP) and VC, then extracts VC attributes.

In section 302 HOLDER will generate (or fetch) the SUBJECT_KEY_PAIR at **(23)** and the associated Decentralized Identifier (DID) with key method at **(24).** The HOLDER via the ISO Wallet 14 uploads the ISO_TOKEN to the JIT_ISSUER_CONVERTER at **(25)** which will forward the ISO_TOKEN to the ISO_ISSUER at **(26)** requesting the HOLDERs data as described in the ISO standard. When the HOLDER_DATA is received via the ISO response at **(27),** the JIT_ISSUER_CONVERTER will verify the ISSUER_SIGNATURE and extract the encoded ATTRIBUTES at **(28).** The JIT_ISSUER_CONVERTER will generate the JIT_VC for the DID containing the ATTRIBUTES at **(29).** The JIT_ISSUER_CONVERTER sends the JIT_VC back to the HOLDER via the ISO wallet at **(30).** The JIT_VC will then be wrapped in a JIT_VP and signed with the SUBJECT_PRIV_KEY at **(31).** SUBJECT_KEY_PAIR may be discarded at **(32)** as shown in block 308 or stored for later usage. The DID and JIT_VC can also be discarded or cached or stored for later use. The HOLDER via the ISO wallet will build the PRESENTATION_REQUEST containing the JIT_VP at **(33)** and send it back to the VC_VERIFIER at **(34).** Accordingly, the VC Verifier 16 at **(35)** verifies the VP (presentation), VC and access attributes.

### VC to ISO 18013-5 conversion

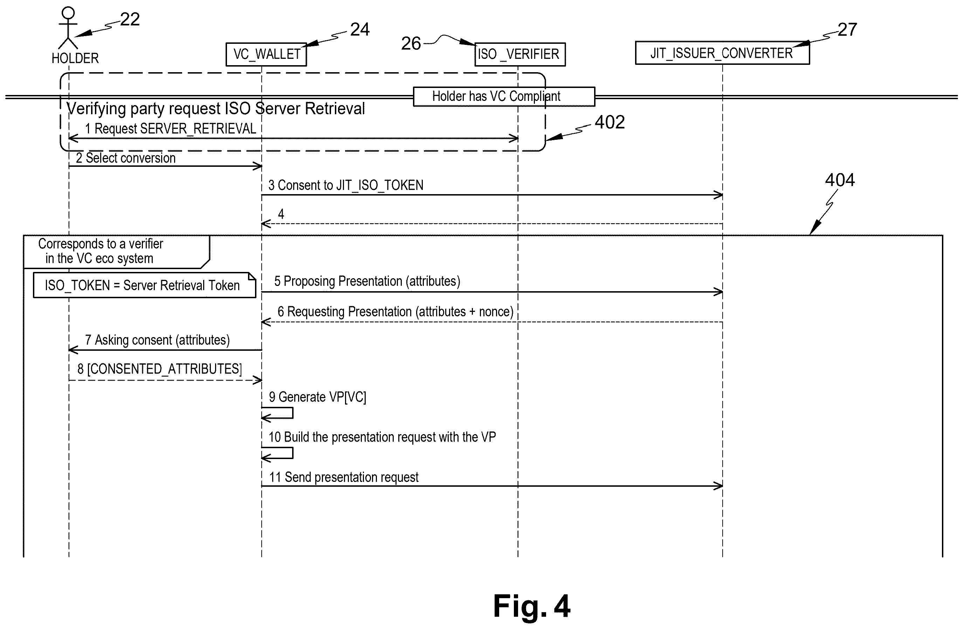

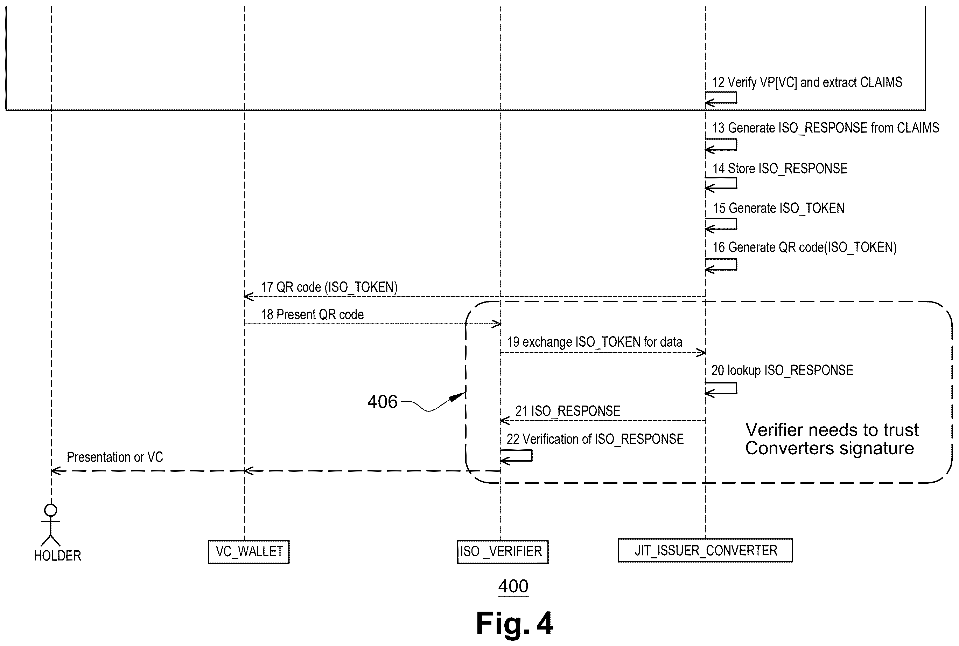

As a pre requisite and with further references to FIGs. 2 and 4, the following environment should exist:
- HOLDER 22 has VC compliant document 21.
- HOLDER's verifiable credentials or VC is in VC_WALLET 24.

As shown in the flow chart 400 of FIG. 4, the flow will start with the ISO_VERIFIERs request for SERVER_RETRIEVAL at **(1)** as part of block 402 where the Verifying party requests for Server Retrieval. HOLDER 22 will select JIT_CONVERSION in the VC_WALLET 24 at **(2).** A consent for JIT_CONVERSION will be sent to the JIT_ISSUER_CONVERTER 27 at **(3).**

The JIT_ISSUER_CONVERTER 27 confirms or acknowledges receipt of the consent at **(4).** Then the VP[VC] will be sent to the JIT_ISSUER_CONVERTER 17 which will verify and extract the CLAIMS as part of the overall block 404.

Block 404 corresponds to a verifier in the VC ecosystem which include the steps of proposing a presentation with attributes from the VC Wallet 24 to the JIT_Issuer_Converter 27 at **(5).** The JIT_lssuer_Converter 27 at **(6),** requests presentation with attributes and nonce. At **(7),** the VC_Wallet 24 asks consent including consent for attributes from the holder 22 and the holder 22 can consent to providing the attributes at **(8)** via the VC_Wallet 24. The VC_Wallet 24 then generates the presentation VP [VC] at **(9)** and the VC_Wallet 24 further builds the presentation request with the VP at **(10)** and sends the presentation request to the JT_Issuer_Converter 27 at **(11).** The JT_Issuer_Converter 27 at **(12)** then verifies the VP [VC] and extracts the CLAIMS as shown.

JIT_ISSUER_CONVERTER 27 next generates an ISO_RESPONSE from the CLAIMS at **(13),** stores it for later lookup at **(14)** and generates an ISO_TOKEN at **(15).** The JIT_ISSUER_CONVERTER 27 encodes the ISO_TOKEN as a QR_CODE at **(16)** and sends the QR_CODE back to the VC_WALLET 24 at **(17),** where it will be displayed and the HOLDER 22 (via the VC_Wallet 24) can present it to the ISO_VERIFIER 26 at **(18).** The ISO_VERIFIER 26 extracts the ISO_TOKEN from the QR_CODE and queries the JIT_ISSUER_CONVERTER 27 for data at **(19)** as described in the SERVER_RETRIEVAL of the ISO standard as part of block 406 where the Verifier needs to trust the Converter's signature. JIT_ISSUER_CONVERTER 27 at **(20)** does a lookup of the ISO_RESPONSE and forwards the ISO_Response to the ISO_Verifier 26 at **(21).** The ISO_Verifier 26 will then do a verification of the ISO_Response at **(22)** and extract attributes.

The embodiments described above have the characteristics of being privacy friendly, where the mDoc issuer does not know the verifier, there is no long term key storage, and the key usage is ephemeral. The embodiments described also show easy adaption of VC in an ISO_WALLET with minimal implementation effort. In some embodiments, a hybrid wallet can be created in 5 easy steps with no additional key to protect. The embodiments can be considered eco friendly with no data duplication in multiple formats. The embodiments also provide increased usability for both non-interoperable standards and can be implemented similarly with other standards. The embodiments form the basis for a simple to use hybrid wallet.

Alternative ways to solve the problem can include a fully hybrid wallet which would be costly to implement and would likely have an unstable eco-system. Such a fully hybrid wallet and system or other alternative system would have a very high maintenance effort for both the backend and frontend. Another alternative would include having separate multiple wallets (VC_WALLET + ISO_WALLET) where the user would need to know which wallet to use to scan what QR Code.

In some embodiments with reference to FIGs. 1 and 3, a computer implemented method 10 or 300 of just-in-time conversion of digital documents from a first secure standard (such as ISO) to a second secure standard (such as VC) that are not inter-operable using one or more processors operatively coupled to memory having computer instructions which when executed by the one or more processors causes the one or more processors to perform the functions at a wallet 14 of the first secure standard in communication with a verifier 16 of the second secure standard, a just-in-time issuer and converter 17 of the second standard, and with an issuer 18 of the first secure standard via the just-in-time issuer and converter 17 of the second standard of making a service request **(at 1)** of the verifier 16 of the second secure standard and sending **(at 3)** a proposed presentation to the verifier 16 of a digital document 11 in the second secure standard, obtaining consent **(at 5)** to a just-in-time conversion and to attributes of the digital document 11 of the second secure standard to provide consented attributes **(at 8),** generating a token **(at 9)** and exchanging the token and consented attributes **(at 10)** with the just-in-time issuer and converter 17 which forwards the token **(at 11)** to the issuer 18 of the first secure standard and securely builds **(at 13-19)** a presentation request for the second secure standard, receiving the presentation request **(at 20)** from the just-in-time issuer and converter 17, forwarding **(at 21)** the presentation request to the verifier 16 of the second secure standard, and presenting a converted presentation of a digital document 11 of the second secure standard in the wallet 14 of the first secure standard as a result of a successful verification **(at 22)** as illustrated in the process of block 301.

In some embodiments, the first secure standard is ISO-18013-5 and the second secure standard is W3C's Verifiable Credentials (VC) and where the wallet 14 of the first secure standard is an ISO Wallet, the verifier 16 of the second secure standard is a VC verifier, the just-in-time issuer and converter 17 is a just-in-time Verifiable Credential issuer and converter, and the issuer 18 of the first secure standard is an ISO Issuer.

In some embodiments, the token sent by the ISO wallet 14 to the a just-in-time Verifiable Credential issuer and converter 17 causes the just-in-time Verifiable Credential issuer and converter 17 to verify a signature and extract attributes **(at 13)** from an ISO response **(at 12)** to the token, generate **(at 14)** a subject key pair, generate **(at 15)** a subject decentralized identifier (DID) with a key method, and generate **(at 16)** a just-in-time verifiable credentials for the subject DID where the just-in-time Verifiable Credentials issuer and converter 17 securely builds the presentation request **(at 19).** In some embodiments, the just-in-time Verifiable Credentials issuer and converter 17 **(at 18)** discards a holder key or keys for an enhanced privacy single use key as represented in block 306.

In some embodiments, to enhance control of the keys from the wallet, allowing multiple use of the JIT generated VC if needed (but at the cost of more VC knowledge in the ISO wallet) as illustrated in block 302, the ISO Wallet 14 is further configured to perform the functions of generating or fetching **(at 23)** a subject key pair, generating or fetching **(at 24)** a subject decentralized identifier (DID) with a key method, exchanging **(at 25)** an ISO token and consented attributes for the just-in-time Verifiable Credentials including the subject DID and subject public key with the just-in-time Verifiable Credential issuer and converter 17, receiving the just-in-time Verifiable Credentials **(at 30),** generating **(at 31)** a just-in-time Verifiable Presentation, building a presentation request **(at 33)** with the just-in-time Verifiable Presentation, sending the presentation request to the verifier 16 **(at 34)** and presenting the converted presentation of the digital document 11 of the Verifiable Credentials standard in the wallet 14 of the ISO standard as a result of a successful verification **(at 35)** as illustrated in the process of block 302. In some embodiments, the method or wallet 14 discards the holder keys and DID **(at 34)** as illustrated within block 308.

In some embodiments with further reference to FIGS. 2 and 4, the method 20 or 400 further has computer instructions which causes the one or more processors to perform the functions at a wallet 24 of the second secure standard in communication with a verifier 26 of the first secure standard, and a just-in-time issuer and converter 27 of the first standard of making a service request **(at 1)** of the verifier 26 of the first secure standard, sending **(at 5)** a proposed presentation of the digital document 21 with attributes to the just in time issuer and converter 27 of the first standard, obtaining consent to attributes of the digital document 21 of the first secure standard to provide consented attributes **(at 8),** building a presentation request **(at 10)** for a presentation in the first secure standard converted from the second secure standard, sending **(at 11)** the presentation request to the just-in-time issuer and converter 27 of the first standard, receiving **(at 17)** a secure access code (such as a QR code) from the just-in-time issuer and converter 27 of the first standard, presenting **(at 18)** the secure access code to the verifier 26 of the first standard, where the verifier 26 of the first standard must trust the just-in-time issuer and converter 27 of the first standard in a verification as represent by block 406, and presenting a converted presentation of a digital document 21 of the first secure standard in the wallet 24 of the second secure standard after a successful verification as illustrated by block 406.

In some embodiments, the first secure standard is ISO-18013-5 and the second secure standard is W3C's Verifiable Credentials and where the wallet 24 of the second secure standard is an VC Wallet, the verifier 26 of the first secure standard is an ISO verifier, and the just-in-time issuer and converter 27 is a just-in-time ISO issuer and converter. In some embodiments, a token **(at 5)** is sent by the VC wallet 24 to the just-in-time ISO issuer and converter 27 which causes the just-in-time ISO Credential issuer and converter 27 to request **(at 6)** a presentation and attributes of the first secure standard in response to the token sent by the VC wallet 24, receive **(at 11)** a presentation request from the VC wallet 24, verify **(at 12)** the presentation and extract claims, generate **(at 13)** an ISO response from the claims extracted, store **(at 14)** the ISO response and generate **(at 15)** an ISO token, generate **(at 16)** a QR code from the ISO token and send **(at 17)** the QR code to the VC wallet 24 (where the QR code serves as the access code), lookup **(at 20)** an ISO response after the VC wallet 24 presents **(at 18)** the QR code to the ISO verifier 26 and the ISO verifier 26 requests **(at 19)** an exchange of data for an ISO Code derived from the ISO token, send **(at 21)** the ISO response to the ISO verifier 26 where the VC wallet 24 presents a converted presentation of a digital document 21 of the ISO-18013-5 standard in the VC wallet 24 after a successful verification **(at 22)** by the ISO verifier as represented by block 406.

In some embodiments with reference to FIGs. 2 and 4, a system (20 or 400) of just-in-time conversion of digital documents 21 from an ISO standard serving as a first secure standard to a second secure standard that are not inter-operable, the system includes one or more processors operatively coupled to memory having computer instructions causing the one or more processors to perform the functions at a just-in-time issuer and converter 27 of ISO standard digital documents (JIT_ISO) of receiving **(at 5)** a proposed presentation and attributes for conversion from a wallet 24 of the second secure standard, requesting **(at 6)** a presentation and attributes from the wallet 24 of the second secure standard, receiving **(at 11)** a presentation request from the wallet 24, verifying **(at 12)** the presentation and extract claims, generating **(at 14)** an ISO response from the extracted claims, storing **(at 14)** the ISO response, generating **(at 16)** an access code, send **(at 17)** the access code to the wallet 24 of the second secure standard, looking up **(at 20)** an ISO response after the wallet 24 of the second secure standard presents **(at 18)** the QR code to the ISO verifier 26 and the ISO verifier 26 requests **(at 19)** an exchange of data for an ISO Code derived from the ISO token, and send **(at 21)** the ISO response to the ISO verifier 26 where the wallet 24 of the second secure standard presents a converted presentation of a digital document 21 of the ISO-18013-5 standard in the wallet 24 after a successful verification **(at 22)** by the ISO verifier 26 as illustrated by the block 406.

In some embodiments with reference to FIG. 4, the ISO standard is ISO-18013-5 and the second secure standard is W3C's Verifiable Credentials standard and where the wallet 24 of the second secure standard is a VC Wallet, and the just-in-time issuer and converter 27 is a just-in-time ISO issuer and converter.

In some embodiments with reference to FIGS. 2 and 4, a token is received **(at 5)** from the VC wallet 24 at the just-in-time ISO issuer and converter 27 which causes the one or more processors at the just-in-time ISO Credential issuer and converter 27 to request **(at 6)** a presentation and attributes of the first secure standard in response to the token sent **(at 5)** by the VC wallet 24, receive **(at 11)** a presentation request from the VC wallet 24, verify **(at 12)** the presentation and extract claims, generate **(at 13)** an ISO response from the claims extracted, store **(at 14)** the ISO response and generate **(at 15)** an ISO token, generate **(at 16)** a QR code from the ISO token and send **(at 17)** the QR code to the VC wallet 24 where the QR code serves as the access code, lookup **(at 20)** an ISO response after the VC wallet 24 presents **(at 18)** the QR code to the ISO verifier 26 and the ISO verifier 26 requests **(at 19)** an exchange of data for an ISO Code derived from the ISO token, send **(at 21)** the ISO response to the ISO verifier 26, and where the VC wallet 24 presents a converted presentation of information about a digital document of the ISO-18013-5 standard in the VC wallet 24 after a successful verification **(at 22)** by the ISO verifier 26 as illustrated in the block 406. In other words, the wallet of a first secure standard is presenting information about a converted presentation of a digital document of the second secure standard in the wallet of the first secure standard. In other embodiments (see below), the wallet of a second secure standard can present information about a converted presentation of a digital document of a first secure standard in the wallet of the second secure standard. In any case, "information about a converted presentation" can be the converted presentation itself in certain embodiments within contemplation of the scope of the claims. "Information about" may include information about a result of the presentation that a user might find useful rather than merely technically converted information. For example, "information about" can include, but is not limited to metadata, an abstract, an extract, or an image of a converted document or presentation as possible instantiations of "information about".

In some embodiments with further reference to FIGs. 1 an 3, when the system 10 or 300 is further converting a VC standard digital document 11 to ISO standard digital data, a just-in-time Verifiable Credentials (VC) issuer and converter 17 is configured to receive **(at 1 or 10)** a generated token and any consented attributes from an ISO wallet 14, forward **(at 11)** the token to the ISO issuer 18, securely build **(at 13-18)** a presentation request for the ISO standard in response to receiving **(at 12)** an ISO response from the ISO issuer 18, and send **(at 20)** the presentation request from the just-in-time VC issuer and converter 17 to the ISO wallet 14, where the ISO wallet 14 presents information about a converted presentation of a VC standard digital document 11 in the ISO wallet 14.

In some embodiments with reference to FIGS. 1-4, the system (10 and 20 or 300 and 400) forms a hybrid wallet that performs just in time conversions of a VC standard digital document 11 to ISO standard digital data and of an ISO standard digital document 21 to VC standard data.

In some embodiments with reference to FIGs. 1 and 3, the token sent **(at 10)** by the ISO wallet 14 to the a just-in-time VC issuer and converter 17 causes the just-in-time VC issuer and converter 17 to verify **(at 13)** a signature and extract attributes from an ISO response **(see 12)** to the token, generate **(at 14)** a subject key pair, generate **(at 15)** a subject decentralized identifier (DID) with a key method, and generate **(at 16)** a just-in-time VC for the subject DID where the just-in-time VC issuer and converter 17 securely builds **(at 19)** the presentation request. In some embodiments, the just-in-time VC issuer and converter 17 discards **(at 18)** a holder key or keys for an enhanced privacy single use key.

In some embodiments with references again to FIGS. 1 and 3, a system 10 or 300 of just-in-time conversion of digital documents 11 from a first secure standard to a second secure standard that are not inter-operable using one or more processors operatively coupled to memory having computer instructions which when executed by the one or more processors causes the one or more processors to perform the functions at a just-in-time issuer and converter 17 of the second secure standard in direct or indirect communication with a wallet 14 of the first secure standard, a verifier 16 of the second secure standard, and with an issuer 18 of the first secure standard, including the steps at the just-in-time issuer and converter 17 of the second secure standard of exchanging **(at 10)** a token and consented attributes with the wallet 14 of the first secure standard, forwarding **(at 11)** the token to the issuer 18 of the first secure standard, securely building **(at 19)** a presentation request for the second secure standard, sending **(at 20)** the presentation request to the wallet 14 of the first secure standard and where the wallet 14 of the first secure standard presents information about a converted presentation of a digital document 11 of the second secure standard in response to a successful verification **(at 22)** by the verifier 16.

In some embodiments, the first secure standard is ISO-18013-5 and the second secure standard is W3C's Verifiable Credentials and where the wallet 14 of the first secure standard is an ISO Wallet, the verifier 16 of the second secure standard is a VC verifier, the just-in-time issuer and converter 17 is a just-in-time Verifiable Credential issuer and converter, and the issuer 18 of the first secure standard is an ISO Issuer.

In some embodiments, the token sent **(at 10)** by the ISO wallet 14 to the a just-in-time Verifiable Credential issuer and converter 17 causes the just-in-time Verifiable Credential issuer and converter 17 to verify **(at 13)** a signature and extract attributes from an ISO response **(see 12)** to the token, generate **(at 14)** a subject key pair, generate **(at 15)** a subject decentralized identifier (DID) with a key method, and generate **(at 16)** a just-in-time VC for the subject DID where the just-in-time Verifiable Credentials issuer and converter securely builds **(at 19)** the presentation request.

In some embodiments, the just-in-time Verifiable Credentials issuer and converter 17 discards **(at 18)** a holder key or keys for an enhanced privacy single use key.

In some embodiments with references to FIGS. 1 and 3, the system (10 or 300) forms a hybrid wallet that performs just in time conversions of a VC standard digital document 11 to ISO standard digital data.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent if applicable.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea. Furthermore, when interpreting the claims, the order of the elements may or may not be critical and it can be assumed in many instances that the order of certain functions can be performed either in the order presented in the claims or in a different order within contemplation of the scope of the embodiments.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A system of just-in-time conversion of digital documents from an ISO standard serving as a first secure standard to a second secure standard that are not inter-operable, the system comprising:
one or more processors operatively coupled to memory having computer instructions which when executed by the one or more processors causes the one or more processors to perform the functions at a just-in-time issuer and converter of ISO standard digital documents (JIT_ISO) of:
receive a proposed presentation and attributes for conversion from a wallet of the second secure standard;
request a presentation and attributes from the wallet of the second secure standard;
receive a presentation request;
verify the presentation and extract claims;
generate an ISO response from the extracted claims;
store the ISO response;
generate an access code;
send the access code to the wallet of the second secure standard;
lookup an ISO response after the wallet of the second secure standard presents the QR code to the ISO verifier and the ISO verifier requests an exchange of data for an ISO Code derived from the ISO token;
send the ISO response to the ISO verifier; and
wherein the wallet of the second secure standard presents information about a converted presentation of a digital document of the ISO-18013-5 standard in the wallet after a successful verification by the ISO verifier.

2. The system of claim 1, wherein the ISO standard is ISO-18013-5 and the second secure standard is W3C's Verifiable Credentials standard and wherein the wallet of the second secure standard is an VC Wallet, and the just-in-time issuer and converter is a just-in-time ISO issuer and converter.

3. The system of claim 2, wherein a token is received from the VC wallet at the just-in-time ISO issuer and converter which causes the one or more processors at the just-in-time ISO Credential issuer and converter to:
request a presentation and attributes of the first secure standard in response to the token sent by the VC wallet;
receive a presentation request from the VC wallet;
verify the presentation and extract claims;
generate an ISO response from the claims extracted;
store the ISO response and generate an ISO token;
generate a QR code from the ISO token and send the QR code to the VC wallet, wherein the QR code serves as the access code;
lookup an ISO response after the VC wallet presents the QR code to the ISO verifier and the ISO verifier requests an exchange of data for an ISO Code derived from the ISO token;
send the ISO response to the ISO verifier; and
wherein the VC wallet presents a converted presentation of a digital document of the ISO-18013-5 standard in the VC wallet after a successful verification by the ISO verifier.

4. The system of any of claims 2 or 3, when the system is converting a VC standard digital document to ISO standard digital data, a just-in-time Verifiable Credentials (VC) issuer and converter is configured to:
receive a generated token and any consented attributes from an ISO wallet;
forward the token to the ISO issuer;
securely build a presentation request for the ISO standard in response to receiving an ISO response from the ISO issuer; and
send the presentation request from the just-in-time VC issuer and converter to the ISO wallet, wherein the ISO wallet presents a converted presentation of a VC standard digital document in the ISO wallet.

5. The system of claim 4, wherein the system forms a hybrid wallet that performs just in time conversions of a VC standard digital document to ISO standard digital data and of an ISO standard digital document to VC standard data.

6. The system of any of claims 4 or 5, wherein the token sent by the ISO wallet to the a just-in-time VC issuer and converter causes the just-in-time VC issuer and converter to:
verify a signature and extract attributes from an ISO response to the token;
generate a subject key pair;
generate a subject decentralized identifier (DID) with a key method; and
generate a just-in-time for the subject DID;
wherein the just-in-time VC issuer and converter securely builds the presentation request.

7. The system of claim 6, wherein the just-in-time VC issuer and converter discards a holder key or keys for an enhanced privacy single use key.
